# EUROPEAN PATENT SPECIFICATION

(11) **EP 1 455 591 B1**
(45) Date of publication and mention of the grant of the patent: **27.04.2011**
(21) Application number: 02787589.7
(22) Date of filing: 07.11.2002
(51) Int. Cl.: A23G 4/06, A23G 4/20, A23G 4/04

(54) **SPHEROIDAL MINI-CHEWING GUMS AND MANUFACTURING PROCESS THEREOF**
KUGELFÖRMIGE MINI- KAUGUMMI UND DEREN HERSTELLUNGSVERFAHREN
GOMMES A MACHER SPHERIQUES ET LEUR PROCEDE DE FABRICATION

(30) Priority: 21.12.2001 IT MI20010275
(43) Date of publication of application: 15.09.2004
(73) Proprietor: Perfetti Van Melle S.p.A., 20020 Lainate (Milan) (IT)
(72) Inventor: COLLE, Roberto, I-20020 Lainate (IT); SOZZI, Giuseppe, I-20020 Lainate (IT); SALMOIRAGHI, Guglielmo, I-20020 Lainate (IT); SARRICA, Andrea, I-20020 Lainate (IT)
(74) Representative: Minoja, Fabrizio
(86) International application number: PCT/EP2002/012423
(87) International publication number: WO 2003/053156

(56) References cited:
- EP-A- 0 221 850
- EP-A- 0 506 251
- WO-A-01/24640
- WO-A-93/17573
- US-A- 4 317 838
- US-A- 5 258 187
- US-A- 5 318 784
- US-A- 5 667 824
- US-A- 5 733 587
- "Gala underwater pelletizers" November 1997 (1997-11) , GALA NEWSLETTER, XX, XX, PAGE(S) 1-12 XP002954765 Page 3, figure page 3, line 1 - last line page 8, line 1 - last line

## Description

The present invention relates to small pellets or "mini-dragées" with a core consisting of a gum base which is flavored and sweetened with high-intensity sweeteners, and formulated without the sugars or polyols conventionally used in the manufacture of traditional chewing gums.

Gum base, one of the main, most complex ingredients in chewing gum, can be made by mixing ingredients belonging to the following classes: vegetable or synthetic gums, resins, waxes, emulsifiers, processing aids, fillers and antioxidants.

The gums supply the cohesive structure of the gum base; this structure may vary, depending on the specific gum or mixture of gums used, which may be synthetic or vegetable gums. The synthetic gums typically used are polyisobutylene, isobutylene-isoprene copolymer, and others. The vegetable gums traditionally used to make the gum base are chicle, jelutong, etc.

Various types of resins may be used to modify the hardness of the gum base, as well as having a cohesive effect on it. The main resins used, listed by way of example but not of limitation, are terpene resins, rosin esters and polyvinyl acetate.

Waxes, emulsifiers and processing aids are normally used to modify the texture and plasticity of the gum base. This large class of ingredients includes the following ones, listed by way of example but not of limitation: hydrogenated vegetable oils (such as palm, cotton and soy oils), microcrystalline waxes and refined and synthetic paraffin waxes, beeswax, candelilla and carnauba wax, acetic esters, glycerol monostearates and their acetic esters, glycerol and others.

Fillers also have an important influence on the mechanical and structural properties of the gum base, as well as being useful as supports or gliding agents. The fillers most often used are calcium carbonate, magnesium carbonate and talc.

In addition to the above-mentioned classes of ingredients, other ingredients may also be added to the gum base, such as antioxidants, designed to preserve it from oxidative effects which could adversely affect its flavor or reduce its durability.

A typical gum base composition is set out below:

| **Ingredient** | **Example no. 1** | **Example no. 2** |
|---|---|---|
| Synthetic gums | 21.7% | 9.8% |
| Vegetable gums | -- | -- |
| Resins | 35.0% | 41.7% |
| Waxes and hydrogenated vegetable oils | 21.4% | 3.3% |
| Emulsifiers and processing aids | 6.3% | 2.9% |
| Fillers | 15.5% | 42.2% |
| Antioxidants | 0.1 % | 0.1 % |
| TOTAL | 100.0% | 100.0% |

Most chewing gums now available are presented in the form of sticks or pellets. Chewing gum pellets comprise a core of gum base mixed with other components (flavorings, polyols and/or sugars, plasticisers, etc.) with a coating consisting of sugar or polyols such as maltitol, xylitol and the like.

The traditional pellets are quite large. Spherical or spheroidal pellets may have a diameter of 10-15 mm, while gum in the form of rectangular tablets may have dimensions of approx. 10 x 20 mm or even more.

The size of chewing gum pellets, which are becoming more popular on the market than sticks, is partly due to technical requirements associated with the formulation of the gum; in order to produce the characteristic of chewability, a polyol matrix must be added to the gum base in the proportion of approximately twice the weight of the gum base. However, for the reasons stated above, if conventional production methods were applied to the manufacture of small pellets the results would be unacceptable, since the absolute amount of gum base would be too low, and the composition would not be sufficiently chewable.

On the other hand, the gum base alone, without the addition of a polyol matrix, enables small pellets of acceptable chewability to be produced. However, a flavored, sweetened gum base of this kind has plasticity characteristics that make rolling into sticks or pellet cores difficult, if not impossible; moreover, the use of ordinary rolling mills prevents spheroidal products from being made.

Chewing gum in the shape of small spheroidal pellets would be desirable for various reasons: for example, consumers could modify the amount of gum chewed as required by using a suitable number of small pellets, possibly at different times (e.g. in sequence). In addition, a small spheroidal pellet would be liked better by children, as chewing a mass with a volume exceeding a given threshold can be uncomfortable and unsatisfactory for them.

Italian patent no. 1180176, in the name of Gum Base Co. SpA, relates to a non-cariogenic, low-calorie gum base composition with no sugar matrix, characterized by a specific composition of the various components of the gum base such as polyisobutylene elastomers, vegetable or animal oils, vinyl polymers, resins, natural gums, waxes, and mono- and di-glycerides of fatty acids. This gum base, added with flavorings, high-intensity sweeteners and glycerin, allows the manufacture of chewing gum with good plasticity characteristics and a very high gum base content, despite the absence of a sugar or polyol matrix. The same patent relates to the manufacture of sticks by rolling the gum base composition, but not to the production of pellets.

Flavored gum base compositions are disclosed in US 6264999, which however always refers to the use of erythritol as bulk sweetener. WO 96/08157 describes a process for the extrusion of gum base which may also contain flavorings.

EP 732055 discloses a continuous process for the preparation of chewing gums without separate preparation of the gum base. The specific examples in this document also involve the use of sugars or polyols.

Finally, US 6017565 describes a continuous process similar to that disclosed in EP 732055, and illustrates in detail the manufacture of chewing gums in pellet form. The use of polyols, in particular sorbitol and mannitol, is also described in this case. US 5 667 824 discloses a process for forming a miniature size confectionery, such as bubble gum, into a thin flat sheet.

The prior art therefore does not contain teachings or suggestions useful for the preparation of small size gum base cores without sugar or polyol matrices, which contain flavorings and high-intensity sweeteners.

It has now been found that small pellets or mini-dragées containing a spheroidal core with a diameter below 10 mm, preferably a diameter below 7 mm, and even more preferably a diameter below or equal to 5 mm, constituted by a flavored and sweetened gum base as defined in the claims, are obtained with a process that comprises:
a) mixing the gum base components in a mixer at the temperatures normally used;
b) cooling the mixture obtained in a) to a temperature of between 60 and 90°C, possibly in a second mixer, and addition of flavorings and high-intensity sweeteners under stirring;
c) extruding the mass obtained in b) in a heated extruder through small-diameter holes;
d) forming the cores by cutting with rotating blades immersed in a water stream at a temperature of between 10 and 20°C;
e) separating, drying and talcing or dusting the spheroidal cores obtained in d);
f) possibly, coating the spheroidal cores.

The production method of the present invention not only allows the production of mini-dragées as described above, but also eliminates the usual step of mixing the gum base with the other ingredients (such as sugar or sorbitol), and above all the rolling step.

Various types of gum base can be used in accordance with the invention, provided that they possess some essential properties such as not sticking to the teeth and are pleasant to chew as a result of the simple addition of flavorings and possibly high-intensity sweeteners. It has been found that the gum bases which guarantee absence of stickiness and the best chewing characteristics are preferably obtained with formulations included in the following example:
- 8 to 15% of an elastomer selected from the group comprising polyisobutylene and isobutylene-isoprene copolymer
- 0 to 8% of a natural gum
- 8 to 20% of resins selected from the group of vegetable and synthetic resin esters
- 8 to 20% of polyvinyl acetate
- 8 to 25% of hydrogenated or partly hydrogenated vegetable or animal oils
- 3 to 10% of waxes selected from the group comprising vegetable waxes and waxes derived from petroleum or obtained synthetically
- 2 to 10% of emulsifiers and processing aids, more specifically glycerol monostearate, acetylated monoglycerides, lecithins and triacetin
- 10 to 45% of inert mineral fillers
- up to 0.1% of antioxidants.

The flavorings used in accordance with the invention can be selected from a wide range; typical examples include essential oils (peppermint oil, citrus fruit oil, fruit essence, etc.) or synthetic flavorings.

Acesulfame K, neo-hesperidin dihydrochalcone, are used as high-intensity sweeteners.

Acesulfame K and neo-hesperidin DC in particular are used for their heat stability.

It has surprisingly been found that the use of neo-hesperidin DC, as high-intensity sweetener in combination with acesulfame K, in amounts ranging from 10 ppm up to 400 ppm, gives to the coated spheroidal pellet, after dissolution of the coating polyalcohol, a surprisingly long-lasting release of the taste from the residual gum. This is due to the persistence of the sweet taste in the residual gum during chewing, which allows the palate a long-lasting perception of the flavorings as well.

This persistence of the sweet taste (which is unique among the other high-intensity sweeteners) derives from the optimal partition of neo-hesperidin between saliva and base gum polymers, which provides a longer-lasting permanence and therefore a longer-lasting release of neo-hesperidin in the gum base.

If desired, the sweetener and/or flavorings can be encapsulated by known techniques in order to stabilize them.

Colorings or other additives acting as plasticisers, suitable for foodstuffs, such as glycerol, sorbitol syrup and the like, may also be added to the gum base.

One of the specific embodiments of the process for preparation of the pellets in accordance with the invention comprises a first step in which all starting materials constituting an ordinary gum base (elastomers, polymers, fillers, hydrogenated oils, waxes and everything else needed) are added in a double-Z mixer. Mixing takes place with heating at the temperatures normally used until a homogenous, liquid, but viscous mass is obtained. This step is identical to the process used for an ordinary gum base, and can be performed with any suitable mixer, including a continuous mixer or extruder.

If continuous extruders are used, the flavoring can be added in the last part of the extruder with no need for the cooling and mixing step described below, and the resulting product can directly feed the spheroidal core formation unit.

If double-Z or non-continuous mixers are used, the mixed mass can be transferred while still hot to a second unheated or water-cooled mixer until it reaches a temperature of approx. 80°C. The flavoring, and possibly high-intensity sweetener, can then be added. It is important to use a mixer that minimizes mixing time with the flavoring to avoid loss of flavoring, such as a screw mixer with plough blades. It is also important not to reduce the temperature excessively, in order to prevent problems during later steps. The ideal temperature of the mass is between 60 and 90°C.

At this step the paste is extracted by a pump and forced into an extruder for formation of the spheroidal cores. Both the pump body and the extruder are steam-heated to prevent seizure of the unit. At the end of the extrusion channels the paste is immediately cut into small portions of the required length by rotating scraper blades. The paste is cut while fully immersed in a cold water stream (10-20°C). The cut portions are shaped by the turbulence of the stream into a spheroidal shape and simultaneously cooled and sent to a separation tank where the spheroidal cores are separated by centrifugation, collected by a conveyor belt, dried and talced, while the water is cooled and recirculated.

As the gum base is hydrophobic, the formation and cooling process does not cause any significant losses of flavoring or sweetener.

The flavoring could alternatively be mixed with the gum base by omitting the second screw mixer and inserting a static mixer between the feed tank and the extruder.

The product obtained at this step is complete, and can be used as is or coated.

A conventional coating process is used.

The very small size of the cores provides an end product in which the coated part has a percentage weight greater than that of a standard product, and weighs 40% more than the total pellet. Coating may be carried out using polyols such as maltitol, isomalt, sorbitol, xylitol and the like, either alone or mixed. Maltitol and isomalt are particularly preferred.

In view of the high percentage of coating and the polyalcohol chosen, the pellet is much crunchier than others on the market.

The example below illustrates the invention in greater detail.

### Core composition

| **Ingredient** | **Percentage** |
|---|---|
| Gum base | 96% |
| Peppermint flavoring | 3.8% |
| Acesulfame K | 0.19% |
| Neo-hesperidin DC | 0.01% |
| Total | 100% |

### Coating composition

| **Ingredient** | **Percentage** |
|---|---|
| Maltitol | 90.25% |
| Titanium dioxide | 4% |
| Peppermint flavoring | 1.5% |
| Glycerin | 1% |
| Aspartame | 0.2% |
| Gum arabic | 3% |
| Carnauba wax | 0.05% |
| Total | 100% |

In this example, the coating constitutes 50% of the end weight of the pellet.

### Example of core production process

1. Preparation of gum in a double-Z mixer at 115°C.
2. Transfer of mass to a screw mixer with plough blades at 90°C.
3. Addition of flavorings and sweeteners, and stirring for 60 min.
4. Extrusion and cutting of extruded mass of flavored gum.
5. Formation of cores with water stream at 10-20°C.
6. Drying and talcing of cores.

## Claims

1. A spheroidal chewing gum pellet containing a spheroidal core with a diameter below 10 mm, consisting of a flavored gum base sweetened by high-intensity sweeteners selected from acesulfame K and/or neo-hesperidin DC.

2. A pellet as claimed in claim 1, further coated with a polyol or sugar coating layer.

3. A pellet as claimed in claim 2, wherein the polyols are selected from maltitol and isomalt.

4. A pellet as claimed in one or more of claims 1-3, wherein the core contains gum base, one or more flavorings, and possibly colorings and plasticizers.

5. A pellet as claimed in one or more of claims 1-4, wherein the sweeteners and/or the flavorings are encapsulated.

6. A pellet as claimed in one or more of claims 1 to 5, wherein the coating layer constitutes at least 40% by weight of the whole pellet.

7. A pellet as claimed in claim 1, wherein the gum base is selected from those having the following composition:
- 8 to 15% of an elastomer selected from the group comprising polyisobutylene and isobutylene-isoprene copolymer
- 0 to 8% of a natural gum
- 8 to 20% of resins selected from the group of vegetable and synthetic resin esters
- 8 to 20% of polyvinyl acetate
- 8 to 25% of hydrogenated or partly hydrogenated vegetable or animal oils
- 3 to 10% of waxes selected from the group comprising vegetable waxes and waxes derived from petroleum or obtained synthetically
- 2 to 10% of emulsifiers and processing aids, specifically glycerol monostearate, acetylated monoglycerides, lecithins and triacetin
- 10 to 45% of inert mineral fillers
- up to 0.1% of antioxidants.

8. A pellet as claimed in claim 1, wherein the gum base is selected from those having the following composition:
| | |
|---|---|
| - synthetic gums | 12.6% |
| - terpene resins/rosin esters | 14.3% |
| - polyvinyl acetate | 14.1% |
| - hydrogenated vegetable oils | 10.9% |
| - microcrystalline waxes | 4.8% |
| - glycerol monostearates | 4.0% |
| - acetylated monoglycerides | 0.8% |
| - lecithins | 0.4% |
| - fillers | 38.0% |
| - antioxidants | 0.1% |

9. A process for the manufacture of the pellets claimed in claims 1-8, which comprises:
a) mixing the gum base components in a mixer at the temperatures normally used;
b) cooling the mixture obtained in a) to a temperature of between 60 and 90°C, possibly in a second mixer, and adding flavorings and high-intensity sweeteners under stirring;
c) extruding the mass obtained in b) in a heated extruder through small-diameter holes;
d) cutting the extruded portions with rotating blades immersed in a water stream at a temperature of between 10 and 20°C;
e) separating, drying and talcing or dusting the spheroidal cores obtained in d);
f) possibly, coating the spheroidal cores.

10. A process for the manufacture of the pellets claimed in claims 1-8, which comprises:
a) mixing the gum base components in a mixer at the temperatures normally used;
b) cooling the mixture obtained in a) to a temperature of between 60 and 90°C, and injecting flavorings and high-intensity sweeteners upstream of a static mixer;
c) extruding the mass obtained in b) in a heated extruder through small-diameter holes;
d) cutting the extruded portions with rotating blades immersed in a water stream at a temperature of between 10 and 24°C;
e) separating, drying and talcing or dusting the spheroidal cores obtained in d);
f) possibly, coating the spheroidal cores.

## Patentansprüche

1. Ein kugelförmiges Kaugummipellet, enthaltend einen kugelförmigen Kern mit einem Durchmesser von weniger als 10 mm, bestehend aus einem aromatisierten Gummigrundbestandteil, welcher durch Süßstoffe mit hoher Intensität, ausgewählt aus Acesulfam K und/oder Neohesperidin DC, gesüßt ist.

2. Ein Pellet wie in Anspruch 1 beansprucht, welches ferner mit einer Polyol- oder Zuckeruberzugsschicht beschichtet ist.

3. Ein Pellet wie in Anspruch 2 beansprucht, wobei die Polyole aus Maltit und Isomalt ausgewählt sind.

4. Ein Pellet wie in einem oder mehreren der Ansprüche 1-3 beansprucht, wobei der Kern einen Gummigrundbestandteil, einen oder mehrere Geschmackstoffe und gegebenenfalls Farbmittel und Weichmacher enthält.

5. Ein Pellet wie in einem oder mehreren der Ansprüche 1-4 beansprucht, wobei die Süßstoffe und/oder die Geschmackstoffe eingekapselt sind.

6. Ein Pellet wie in einem oder mehreren der Ansprüche 1 bis 5 beansprucht, wobei die Überzugsschicht mindestens 40 Gew.-% des gesamten Pellets ausmacht.

7. Ein Pellet wie in Anspruch 1 beansprucht, wobei der Gummigrundbestandteil ausgewählt ist aus solchen mit der folgenden Zusammensetzung:
- 8 bis 15 % eines Elastomers, ausgewählt aus der Gruppe umfassend Polyisobutylen und Isobutylen-Isopren-Copolymer
- 0 bis 8 % eines Naturgummis
- 8 bis 20 % Harze, ausgewählt aus der Gruppe von pflanzlichen und synthetischen Harzestem
- 8 bis 20 % Polyvinylacetat
- 8 bis 25 % gehärtete oder teilweise gehärtete pflanzliche oder tierische Öle
- 3 bis 10 % Wachse, ausgewählt aus der Gruppe umfassend pflanzliche Wachse und aus Petroleum hergeleitet Wachse oder synthetisch erhaltene Harze
- 2 bis 10 % Emulgatoren und Verarbeitungshilfsmittel, insbesondere Glycerinmonostearat, acetylierte Monoglyceride, Lecithine und triacetin
- 10 bis 45 % inerter mineralischer Füllstoffe
- bis zu 0,1 % Antioxidantien.

8. Ein Pellet wie in Anspruch 1 beansprucht, wobei der Gummigrundbestandteil ausgewählt ist aus solchen mit der folgenden Zusammensetzung:
| | |
|---|---|
| - synthetische Gummis | 12,6% |
| - Terpenharze/Kolophonium | 14,3% |
| - Polyvinylacetat | 14,1% |
| - gehärtete pflanzliche Öle | 10,9% |
| - mikrokristalline Wachse | 4,8% |
| - Glycerinmonostearate | 4,0% |
| - acetylierte Monoglyceride | 0,8% |
| - Lecithine | 0,4% |
| - Füllstoffe | 38,0% |
| - Antioxidantien | 0,1%. |

9. Ein Verfahren zur Herstellung der in den Ansprüchen 1-8 beanspruchten Pellets, umfassend:
a) Mischen der Komponenten des Gummigrundbestandteils in einem Mischer bei den normalerweise verwendeten Temperaturen;
b) Kühlen des in Schritt a) erhaltenen Gemischs auf eine Temperatur zwischen 60 und 90 °C, gegebenenfalls in einem zweiten Mischer, und Zugeben von Geschmackstoffen und Süßstoffen mit hoher Intensität unter Rühren;
c) Extrudieren der in Schritt b) erhaltenen Masse in einem beheizten Extruder durch Löcher mit kleinem Durchmesser;
d) Schneiden der extrudierten Portionen mit rotierenden Klingen, eingetaucht in einen Wasserstrom bei einer Temperatur zwischen 10 und 20°C;
e) Abtrennen, Trocknen und Talken oder Bestäuben der in d) erhaltenen kugelförmigen Kerne;
f) gegebenenfalls Beschichten der kugelförmigen Kerne.

10. Ein Verfahren zur Herstellung der in den Ansprüchen 1-8 beanspruchen Pellets, umfassend:
a) Mischen der Komponenten des Gummigrundbestandteils in einem Mischer bei den normalerweise verwendeten Temperaturen;
b) Kühlen des in a) erhaltenen Geirrischs auf eine Temperatur zwischen 60 und 90 °C und Einspritzen von Geschmackstoffen und Süßstoffen mit hoher Intensität stromaufwärts eines statischen Mixers;
c) Extrudieren der in b) erhaltenen Masse in einem beheizten Extruder durch Löcher mit kleinem Durchmesser;
d) Schneiden der extrudierten Portionen mit rotierenden Klingen, eingetaucht in einen Wasserstrom bei einer Temperatur zwischen 10 und 20 °C;
e) Abtrennen, Trocknen und Walken oder Bestäuben der in d) erhaltenen kugelförmigen Kerne;
f) gegebenenfalls Beschichten der kugelförmigen Kerne.

## Revendications

1. Pastille sphéroïdale de gomme à mâcher contenant un coeur sphéroïdal ayant un diamètre inférieur à 10 mm, consistant en une gomme base aromatisée édulcorée par des édulcorants haute intensité choisis parmi l'acésulfame K et/ou la néohespéridine DC.

2. Pastille selon la revendication 1, en outre enrobée avec une couche d'enrobage de polyol ou de sucre.

3. Pastille selon la revendication 2, dans laquelle les polyols sont choisis parmi le maltitol et l'isomalt.

4. Pastille selon une ou plusieurs des revendications 1 à 3, dans laquelle le coeur contient de la gomme base, un ou plusieurs aromatisants, et éventuellement des colorants et des plastifiants.

5. Pastille selon une ou plusieurs des revendications 1 à 4, dans laquelle les édulcorants et/ou les aromatisants sont encapsulés.

6. Pastille selon une ou plusieurs des revendications 1 à 5, dans laquelle la couche d'enrobage constitue au moins 40% en poids de la totalité de la pastille.

7. Pastille selon la revendication 1, dans laquelle la gomme base est choisie parmi celles ayant la composition suivante :
- 8 à 15% d'un élastomère choisi parmi le groupe comprenant un polyisobutylène et un copolymère d'isobutylène-isoprène
- 0 à 8% d'une gomme naturelle
- 8 à 20% de résines choisies parmi le groupe d'esters résineux végétaux et synthétiques
- 8 à 20% de poly(acétate de vinyle)
- 8 à 25% d'huiles végétales ou animales hydrogénées ou partiellement hydrogénées
- 3 à 10% de cires choisies parmi le groupe comprenant des cires végétales et des cires dérivées du pétrole ou obtenues par synthèse
- 2 à 10% d'émulsifiants et d'adjuvants de fabrication, spécifiquement du monostéarate de glycérol, des monoglycérides acétylés, des lécithines et de la triacétine
- 10 à 45% de charges minérales inertes
- jusqu'à 0,1% d'antioxydants.

8. Pastille contenant un coeur sphéroïdal selon la revendication 1, dans laquelle la gomme base est choisie parmi celles ayant la composition suivante:
| | |
|---|---|
| - gommes synthétiques | 12,6% |
| - résines terpène/esters de colophane | 14,3% |
| - poly(acétate de vinyle) | 14,1% |
| - huiles végétales hydrogénées | 10,9% |
| - cires microcristallines | 4,8% |
| - monostéarates de glycérol | 4,0% |
| - monoglycérides acétylés | 0,8% |
| - lécithines | 0,4% |
| - charges | 38,0% |
| - antioxydants | 0,1%. |

9. Procédé de fabrication des pastilles selon les revendications 1 à 8, qui comprend:
a) le mélange des composants de la gomme base dans un mélangeur aux températures normalement utilisées ;
b) le refroidissement du mélange obtenu en a) à une température d'entre 60 et 90°C, éventuellement dans un deuxième mélangeur, et l'ajout d'aromatisants et d'édulcorants haute intensité sous agitation;
c) l'extrusion de la masse obtenue en b) dans une extrudeuse chauffée à travers des trous de petit diamètre ;
d) la coupe des parties extrudées avec des lames rotatives immergées dans un flux d'eau à une température d'entre 10 et 20°C;
e) la séparation, le séchage et le talcage ou le saupoudrage des coeurs sphéroïdaux obtenus en d) ;
f) éventuellement, l'enrobage des coeurs sphéroïdaux.

10. Procédé de fabrication des pastilles selon les revendications 1 à 8, qui comprend:
a) le mélange des composants de la gomme base dans un mélangeur aux températures normalement utilisées ;
b) le refroidissement du mélange obtenu en a) à une température d'entre 60 et 90°C, et l'injection d'aromatisants et d'édulcorants haute intensité en amont d'un mélangeur statique ;
c) l'extrusion de la masse obtenue en b) dans une extrudeuse chauffée à travers des trous de petit diamètre ;
d) la coupe des parties extrudées avec des lames rotatives immergées dans un flux d'eau à une température d'entre 10 et 20°C;
e) la séparation, le séchage et le talcage ou le saupoudrage des coeurs sphéroïdaux obtenus en d);
f) éventuellement, l'enrobage des coeurs sphéroïdaux.
